# EUROPEAN PATENT SPECIFICATION

(11) **EP 4 303 203 B1**
(45) Date of publication and mention of the grant of the patent: **26.02.2025**
(21) Application number: 23183461.5
(22) Date of filing: 04.07.2023
(51) Int. Cl.: C04B 28/00, C04B 111/28

(54) **COATING BASED ON GEOPOLYMER BINDER AND METHOD FOR ATTAINING A COATING BASED ON GEOPOLYMER BINDER**
BESCHICHTUNG BASIEREND AUF GEOPOLYMER BINDEMITTEL UND VERFAHREN ZUM BEREITSTELLEN EINER BESCHICHTUNG BASIEREND AUF GEOPOLYMER BINDEMITTEL
REVÊTEMENT À BASE DE LIANT GÉOPOLYMÈRE ET PROCÉDÉ POUR FOURNIR UN REVÊTEMENT À BASE DE LIANT GÉOPOLYMÈRE

(30) Priority: 04.07.2022 IT 202200014143
(43) Date of publication of application: 10.01.2024
(73) Proprietor: ALISEA S.r.l. Società Benefit, 36100 Vicenza (IT)
(72) Inventor: REGGIANI, Alex, 42013 Casalgrande (RE) (IT); SACCOZZA, Alberto, 36030 Caldogno (VI) (IT); MARTUCCI, Susanna, 36030 Caldogno (VI) (IT)
(74) Representative: Gallo, Luca

(56) References cited:
- EP-A1- 3 670 471
- WO-A1-2017/006102
- WO-A1-2020/239893
- KR-A- 20160 081 947
- US-A1- 2013 206 033
- US-A1- 2022 048 822

## Description

### Field of application

The present invention relates to a coating based on geopolymer binder and a method for attaining a coating based on geopolymer binder according to the preamble to the respective independent claims.

The coating and the method in question are intended to be advantageously used in the field of the production of coating materials, in particular for building, such as low-thickness restoration mortars, finishing plasters, paints and sprays.

In particular, the coating and the method object of the present invention can be advantageously used for the partial or complete coating of wall surfaces, floors or other construction elements, both in brick and in other materials.

Therefore, the invention generally falls within the industrial sector of the production and processing of coating material, in particular for constructions, based on geopolymer binder.

### State of the art

Various coatings based on inorganic binders, such as mortar and plaster, or based on organic resins, such as paints and sprays, are known in the field of coating materials, in particular for building.

With reference to the first types of coatings, these are generally made by mixing hydraulic binders, such as cement and hydraulic lime, or aerial binders, such as gypsum and aerial lime, with inert or aggregate material, such as sand or other mineral fillers, and possibly with specific organic additives. In particular, binders and inert materials are mixed with water and additives to produce a paste capable of hardening over time to attain a given mechanical strength substantially dependent on the binder, aggregate and additives used.

Mainly, the process (indicated with the term "curing") which leads to the final hardened state of the product initially occurs by means of a faster setting step, in which the material loses its processability following hydration reactions in which the binder particles and the water in the mixture take part. In particular, such reactions give rise to a layer consisting of hydration products around the binder particles. Such a layer continues to grow in volume, consuming binder and water and stiffening the structure of the material. The fastest forming reaction products are calcium hydrates, which have the form of hexagonal sheets or cubic crystals and are therefore not very suitable for developing mechanical strength.

Subsequently, by means of a slower hardening step, hydrated calcium silicates are formed, which are hydration products in a fibrous crystalline form and more effectively connect the residual binder particles and the aggregates, generally ensuring at least 90% of the mechanical strength of the product in about 28 days.

The curing occurs exclusively in air for the aerial binders, while it can also occur in water for the hydraulic binders.

Generally, the binders are produced by calcining the raw materials, i.e., by subjecting them to a high-temperature heat treatment to make the mineral structure more reactive, eliminating carbon dioxide or water from carbonate or hydrate minerals, respectively.

The products of known type described above have proved to be not free from drawbacks in practice.

The main drawback of the products described above lies in the fact that the hydraulic and aerial binders are necessarily subjected to high calcination temperatures, even up to 850-1050°C for lime and 1450°C for Portland cement, and therefore require a high use of energy for their production. Such products also require a high consumption of water, used to mix the binder and the aggregates, obtain good processability and trigger the hydration process, which continues until the end of curing.

A further drawback of the aforesaid products lies in the fact that their production is connected to a high release of carbon dioxide due to the decarbonization of the carbonate minerals and as a consequence of the production of thermal energy which is mainly used during the calcination.

A further drawback also lies in the long curing times, in particular in the hardening step, which the product needs to reach the ideal mechanical strength. Such a drawback also makes it difficult to avoid the onset of defects in the material, in particular when it is used in external environments, due for example to changes in atmospheric conditions and variations in temperature and humidity.

Lastly, a further drawback lies in the fact that, although they are incombustible and have good resistance to fire, the mechanical resistance of such coatings drops considerably following exposure to high temperatures. In fact, due to high temperatures, for example caused by a fire, the water present in the porous structure of the coating vaporizes, and this phenomenon determines the development of internal overpressures, a consequent dehydration and the progressive loss of binding capacity. The expulsion of small flakes, the dimensional variation of the siliceous aggregates and the decomposition of the calcareous ones determine a significant reduction in the mechanical resistance and a consequent decrease in the response to compression. In particular, a process called "spallation" occurs in concrete, which destabilizes a Portland cement-based material until it collapses starting from 180°C, to reach complete collapse at about 300°C.

As previously stated, coatings based on organic resins are also known, such as paints and sprays, which however have a mainly aesthetic or protective (non-mechanical) function for the coated surfaces.

Furthermore, paints are known which are suitably formulated so as to have fire-retardant properties to protect the underlying material from the risk of fire.

These particular coatings generally contain additives capable of developing gases which suffocate the flames (thus acting on the presence of a comburent, i.e., oxygen), which are released when the coating is exposed to high temperatures. In particular, intumescent epoxy resins are known (used for example in fire doors), which contain ammonium compounds therein. When such resins are exposed to fire, they swell and develop ammonia which suffocates the fire.

In practice, such coatings have also proved to be not free from drawbacks.

The main drawback lies in the fact that the gases released, for example ammonia, are also harmful to humans and can thus make it more difficult to evacuate areas exposed to fire.

A further drawback lies in the fact that such coatings are completely unusable again after they have been exposed to high temperatures, no longer ensuring either adhesion to the surface or operation a second time, since the degradation of the organic resin containing the additive is necessary to release the aforesaid gases.

Lastly, a further drawback lies in the fact that such coatings, being of an organic nature, deteriorate over time, reducing their mechanical strength.

It is known from document US 2022/048822 A1 a composition of a multilayered activated alkalis foam comprising metakaolin and preferably an alkaline solution containing alkali metal hydroxide. The alkaline solution is highly basic and it is mixed in excess quantity with respect to the metakaolin, causing the complete dissolution of the latter and the impossibility of a controlled polycondensation and formation of hydrated minerals in the binder. This composition leads to the same drawbacks of cements and other hydraulic binders, because of the presence of hydrated minerals in their microstructure.

### Presentation of the invention

In this situation, the problem underlying the present invention is therefore that of overcoming the drawbacks manifested by coatings of the known type, providing a coating based on geopolymer binder and a method for making a coating based on geopolymer binder, which allow to increase fire resistance and thermal insulation.

A further object of the present invention is to provide a coating based on geopolymer binder and a method for making a coating based on geopolymer binder, which allow to resist exposure to high temperatures even subsequently, in particular by maintaining their features even after several cycles of exposure to fire.

A further object of the present invention is to provide a coating based on geopolymer binder, which allows having different thermal conductivity features according to the temperatures to which it is exposed.

A further object of the present invention is to provide a coating based on geopolymer binder which has good processability without influencing the duration of curing.

A further object of the present invention is to provide a coating based on geopolymer binder and a method for making a coating based on geopolymer binder, which allow to reduce their environmental impact.

A further object of the present invention is to provide a coating based on geopolymer binder, which is provided with high mechanical properties.

A further object of the present invention is to provide a method for making a coating based on geopolymer binder, which allows the desired mechanical properties to be attained in a short time after its application on a surface.

A further object of the present invention is to provide a coating based on geopolymer binder and a method for making a coating based on geopolymer binder, which are simple and versatile to make.

A further object of the present invention is to provide a coating based on geopolymer binder, which can be applied to various materials with excellent adhesion properties.

A further object of the present invention is to provide a coating based on geopolymer binder, which is aesthetically appreciable.

### Detailed description of a preferred embodiment

The coating based on geopolymer binder according to the present invention is advantageously intended to be used in the production field of coating materials, in particular for building.

In particular, the coating based on geopolymer binder according to the present invention can be advantageously used as a low-thickness restoration mortar, finishing plaster or paint for the partial or complete coating of wall surfaces, floors or other construction elements, both in brick and in other materials such as glass, concrete, plasterboard, plaster, wood and metals (preferably not galvanized).

The coating is in particular applied in a fluid, semi-fluid or creamy form and is intended to harden following the application to the surface.

The expression "coating based on geopolymer binder" is to be understood, according to the invention, as a coating which comprises at least one geopolymer binder.

In particular, the expression "geopolymer binder" advantageously refers to a binder of mineral origin comprising a precursor and a reagent solution comprising a hardening compound dissolved in water and intended to react with the precursor. In particular, when the precursor is mixed with the reagent solution, the mineral compounds which constitute them give rise to mineral polymerization reactions which form chains or lattices of mineral molecules bound by covalent bonds. In general, the reagent solution of a geopolymer binder can be either acidic or basic (with a pH of approximately 12-13), depending on the hardening compound used. Furthermore, the precursor and the hardener can be of different types, for example the precursor can be a natural amorphous aluminosilicate or derived from industrial waste (class F fly ash or blast furnace slag) or amorphous microsilica, while the hardener can be an alkaline silicate compound with a sodium or potassium base (in the event of geopolymerization in a basic environment), or a phosphoric acid (in the event of geopolymerization in an acid environment). Generally, the geopolymerization reactions which cause the binder to harden, occur at room temperature or regardless not higher than 100°C at relatively rapid speeds.

Advantageously, since water does not participate in the aforesaid reactions, geopolymerization is not a hydraulic process and therefore it is not necessary to use large quantities of extra water (the addition is performed only to regulate processability), as it is sufficient to use the bare minimum to obtain good processability. Therefore, the materials known by the name of activated alkalis, which are obtained starting from a strongly alkaline activating solution (with pH even up to 14), will not be intended as geopolymer binders. In fact, an activation of this type leads to disordered condensation and the formation of hydrated minerals in the binder.

According to the invention, the aforesaid geopolymer binder contains an amorphous silico-aluminate precursor.

In particular, the precursor is present in a quantity comprised between 55 and 80% by weight, preferably between 65 and 75%, with respect to the geopolymer binder.

The term "precursor" is to be understood as a material capable of taking part in a chemical reaction, in this case geopolymerization, to bind with other particles, in particular with a hardener which will be described below, forming a single compound.

Preferably, the precursor comprises metakaolin. Thereby, advantageously, the precursor does not need, in its production, to be subjected to extremely high temperatures, requiring less energy consumption with respect to that of a hydraulic binder, since the calcination temperature of a kaolin to transform mineralogically into metakaolin is 750°C. Therefore, the metakaolin is preferably obtained by calcination between 750 and 1150°C and subsequent micronization. In particular, the metakaolin (or more generally the precursor) has a D97 grain size less than 150 µm, preferably less than 100 µm and even more preferably less than 50 µm. The index "D97" means that 97% of the particles have a size lower than that indicated.

Advantageously, the precursor further comprises at least one accelerating compound. For example, the accelerating compound can consist of steelworks discard minerals and/or slag, preferably in mineralogical and grain size equilibrium with the metakaolin.

The expression "grain size equilibrium" means that such an accelerating compound has a grain size substantially compatible with that of metakaolin, while the expression "mineralogical balance" means that such an accelerating compound substantially has a mineralogical composition complementary to metakaolin.

Thereby, the metakaolin and the accelerating compound advantageously cannot be distinguished when they are mixed together, as they are minerals with an amorphous structure.

According to the invention, the geopolymer binder also contains a reagent solution, preferably liquid, which is intended to react with the precursor and comprises a silicate compound.

The expression "reagent solution" means a solution with a hardening effect capable of reacting with the precursor to bind therewith, forming a single geopolymer binder.

Preferably, the silicate compound is selected from among a sodium silicate, a potassium silicate, a lithium silicate and mixtures or compounds thereof; For example, the silicate compound can also be a sodium-potassium silicate.

In more detail, the reagent solution comprises a solvent, preferably water, in which the aforesaid silicate compound is dissolved. Advantageously, the silicate compound is present in a quantity comprised between 35 and 50% by weight with respect to the reagent solution, preferably between 40 and 45%.

In particular, the reagent solution is present in a quantity comprised between 20 to 45% by weight, preferably between 25 and 35% by weight, with respect to the geopolymer binder.

Advantageously, with the precursor and the reagent solution in freely selected quantities within the indicated ranges, a geopolymer binder is obtained with an excellent compromise between mechanical properties and yield.

For example, using a precursor comprising metakaolin with a D97 grain size lower than 4 µm, a greater quantity of silicate compound and therefore of reagent solution is required. In fact, in this case the specific surface of the metakaolin increases and therefore the reactivity and the bonds which it can form with the silicate compound increase. Thereby, a coating capable of achieving excellent mechanical properties is obtained, and yet not only more expensive, due to the cost of the raw materials, but also much stickier, with a lower yield.

Otherwise, it is possible to attain sufficiently high mechanical properties with a metakaolin with a higher grain size and therefore less expensive and with a lower quantity of silicate compound.

Advantageously, the sum of the quantity of precursor and the quantity of reagent solution constitutes at least 90%, and preferably substantially 100%, of the geopolymer binder.

Advantageously, the coating is antibacterial and anti-mold thanks to the basicity of the geopolymer binder both before and after hardening.

In accordance with the idea underlying the present invention, the coating comprises at least a first aggregate in a quantity comprised between 5 and 20% by weight with respect to the coating. In particular, the first aggregate consists of graphite.

In fact, it has been surprisingly found that the addition of graphite as an aggregate within the geopolymer binder improves the thermal properties of the coating itself and in particular improves the heat resistance. In more detail, graphite has a fine lamellar structure which absorbs and reflects infrared rays, neutralizing the effect due to radiation, reducing the passage of heat and thus increasing the insulating properties of the material.

In more detail, it has been found that the coating has variable thermal conductivity features according to the temperature to which it is exposed. At relatively low temperatures, for example if placed in the sun or exposed to a heat source inside a house, the material remains hot and cools down more slowly, i.e., it shows thermal displacement properties. Otherwise, at temperatures of around 700-800°C the coating demonstrates thermal insulation properties.

Furthermore, the coating advantageously has excellent properties of resistance to fire and thermal shock, due to both the insulating properties indicated above, and to the fact that geopolymer and graphite are minerals, therefore incombustible, and do not contain water inside their structure which could evaporate at high temperatures (unlike hydraulic binders). Therefore, the coating manages to maintain its mechanical properties even after being exposed to flame for several cycles.

Furthermore, the addition of graphite has been found to drastically reduce material shrinkage during hardening. In fact, the graphite advantageously has a fine lamellar structure and in particular during hardening it is deposited in the pores of the geopolymer binder, sealing them and acting as a rigid connection between different molecular portions of the geopolymer binder itself.

Graphite also advantageously allows the thixotropic nature of the coating to be increased during application to a surface without adding special organic additives. Furthermore, good processability can be attained without compromising the curing of the coating.

Furthermore, advantageously, after the hardening of the coating, thanks to the presence of the graphite, a material with improved electrical conductivity is attained. In fact, graphite advantageously increases the electrical conductivity of the coating based on geopolymer binder.

Advantageously, the coating based on geopolymer binder has excellent mechanical features, comparable or superior to those obtained with the use of hydraulic or aerial binders.

By means of the combination of the geopolymer binder and graphite, it is therefore possible to make a durable material, resistant both mechanically and to chemical and thermal attacks, more effectively usable, in particular in the building sector but not limited thereto. Furthermore, the material obtained from the hardening of the coating is advantageously light and has a pleasant appearance. Furthermore, the material obtained from the hardening of the coating is advantageously easy to dispose of since it is chemically inert and not dangerous for the environment, nor toxic or harmful.

Advantageously, the graphite contained in the first aggregate is in the form of powder with grain size dimensions less than or equal to 300 µm and preferably less than or equal to 250 µm.

In particular, powdered graphite with a grain size less than or equal to 250 µm is sieved graphite.

In accordance with a variant embodiment of the invention, the graphite in the first aggregate is in aqueous solution. In particular, the graphite in aqueous solution is preferably of grain size less than or equal to 100 µm. For example, it is possible to use a graphite solution of the type described in European patent EP 3392402, which comprises between 35 and 45% by weight of water, between 40 and 50% by weight of graphite and between 5 and 50% by weight of additives, such as dispersing and/or stabilizing agents.

Obviously, without thereby departing from the scope of protection of the present invention, the graphite solution can also have different quantities of components from those indicated above and for example consisting entirely of water and graphite.

Preferably, the graphite contained in the first aggregate is obtained from the recovery of industrial waste, for example from the disposal of electrodes for arc furnaces or by electroerosion. Thereby, the coating is more environmentally sustainable and less expensive.

Advantageously, the coating comprises a second aggregate comprising at least one, and preferably more than one, from among: a spheroid sand, a micronized glass, a mineral filler derived from industrial processing discards, a zeolite.

Advantageously, the spheroid sand is selected from: a spheroid feldspar sand, a spheroid quartz sand and mixtures thereof. The spheroid sand is preferably feldspar sand, as it is advantageously resistant to higher temperatures.

In particular, the spheroid sand preferably has a grain size comprised between 0.1 and 0.3 mm.

Furthermore, the micronized glass preferably has a grain size comprised between 50 and 100 µm, preferably about 75 µm.

Advantageously, the mineral filler derived from industrial processing discards is selected from among: a steelworks discard mineral, granite from industrial waste, quartz from industrial waste and mixtures thereof.

In more detail, the aforesaid steelworks discard mineral can comprise, for example, black slag. Advantageously, the term "black slag" refers, as known, to a mineral which can be assimilated to natural effusive rocks of volcanic origin, which mainly comprises a ternary mixture of calcium oxide (CaO), silicon dioxide (SiO₂) and iron oxides (FeO), to which other components are added in smaller percentages.

Preferably, the mineral filler derived from industrial processing discards has a grain size less than 150 µm, preferably less than or equal to 100 µm.

Preferably, moreover, the zeolite has a grain size less than or equal to 200 µm, preferably less than or equal to 150 µm, still more preferably substantially 50 µm.

In particular, the type and quantity of the second aggregate, where the latter is present, can be chosen based on the intended use of the coating, for example in accordance with the embodiments which will be described later.

Preferably, the overall grain size curve of the second aggregate is comprised between 0 and 0.3 mm.

Advantageously, the combination of the geopolymer binder and one or more of the aggregates mentioned above provides a coating which is also resistant to acid (for example hydrochloric acid) and basic (for example seawater) attacks, as they are all minerals which do not contain carbonates.

In accordance with the preferred embodiment of the invention, the coating advantageously comprises the geopolymer binder in a quantity comprised between 40 and 60% by weight, preferably between 50 and 60% with respect to the coating.

Furthermore, the coating advantageously comprises the first aggregate in a quantity comprised between 5 and 20% by weight, preferably between 7 and 15% and even more preferably about 10%, with respect to the coating.

In more detail, the first aggregate consists, preferably exclusively, of powdered graphite with grain size less than or equal to 250 µm.

Advantageously, the second aggregate comprises spheroid sand in a quantity comprised between 5 and 30% by weight with respect to the coating, preferably between 10 and 25%, even more preferably about 15%.

Advantageously, the second aggregate comprises micronized glass in a quantity less than 20% by weight with respect to the coating, preferably between 4 and 15%, even more preferably about 13%.

Advantageously, the second aggregate comprises the mineral filler derived from industrial processing discards in a quantity less than 15% by weight with respect to the coating, preferably between 3 and 12%, even more preferably about 6%.

Advantageously, the second aggregate comprises zeolite, in particular to increase the sliding of the coating during application, in a quantity less than 1% by weight with respect to the coating, preferably less than 0.5%.

Furthermore, according to the use and the viscosity to be obtained, the coating can comprise an extra quantity of water (more than that contained in the reagent solution) comprised between 2 and 6% by weight with respect to the coating.

Advantageously, the coating further comprises at least one mineral oil, in particular to make the powders heavier and to avoid the dispersion thereof in air. Preferably, the mineral oil is present in a quantity comprised between 0.5 and 1.5% by weight with respect to the coating.

Advantageously, the coating comprises at least one air-entraining additive, in particular a surfactant. It is thereby advantageously possible to incorporate air inside the coating, in particular the geopolymer binder, for example to favor the oxidation of the precursor in the geopolymer binder and/or decrease the density of the coating.

Preferably, the air-entraining additive is present in a quantity less than 1% by weight with respect to the coating, preferably less than 0.5%, even more preferably about 0.1%. Some examples of coating compositions are given below with reference to particular applications on different surfaces.

In the following examples, a two-component geopolymer binder was used comprising a powder precursor called GEOSIB 09, supplied by the company GeoMITS S.r.l. and a potassium or sodium reagent solution, respectively called GEOFAST K01 and GEOFAST N01, supplied by the company INGESSIL S.r.l.

Such a precursor and reagent solution were used in a ratio of about 70:30.

Furthermore, a spheroid sand called FO/34 supplied by the company SIBELCO S.p.A. was used.

Table 1 shows the composition of the coating in accordance with a first embodiment, which is particularly suitable for application on bricks.

**Table 1 - First embodiment example**

| **Material** | **Composition (%)** |
|---|---|
| Geopolymer binder | 50 |
| Graphite | 15 |
| Spheroid sand | 20 |
| Micronized glass | 3.8 |
| Mineral filler | 10 |
| Zeolite | 0.2 |
| Mineral oil | 1 |

Table 2 shows the composition of the coating in accordance with a first embodiment, which is particularly suitable for application on concrete.

**Table 2 - Second embodiment example**

| **Material** | **Composition (%)** |
|---|---|
| Geopolymer binder | 40 |
| Graphite | 20 |
| Spheroid sand | 25 |
| Micronized glass | 8.3 |
| Mineral filler | 5 |
| Zeolite | 0.2 |
| Mineral oil | 1.5 |

Table 3 shows the composition of the coating in accordance with a first embodiment, which is particularly suitable for application on metal, glass and other non-plastic, non-absorbent surfaces.

**Table 3 - Third embodiment example**

| **Material** | **Composition (%)** |
|---|---|
| Geopolymer binder | 60 |
| Graphite | 12 |
| Spheroid sand | 10 |
| Micronized glass | 15 |
| Mineral filler | 3 |
| Zeolite | 0.2 |
| Mineral oil | 0.5 |

In particular, as can be noticed, it is necessary to use a greater quantity of geopolymer binder on less absorbent materials to improve the adhesion on the surface by means of chemical adhesion. Furthermore, the spheroid sand is preferably used in smaller quantities in such a case in favor of finer aggregates.

Advantageously, the quantity of mineral oil is substantially determined as a function of the quantity of graphite (the greater the latter, the greater the quantity of mineral oil required to reduce the dispersion of the powder in the air).

A further object of the invention is a method for attaining a coating based on geopolymer binder, advantageously of the type previously described.

The method for making a coating based on geopolymer binder according to the invention comprises a step of arranging a precursor comprising metakaolin and a silicate compound selected from among a sodium silicate, a potassium silicate, lithium silicate and mixtures or compounds thereof. Furthermore, the step of arranging involves arranging a solvent and at least a first aggregate comprising graphite.

Furthermore, the method involves a first step of mixing the silicate compound with the solvent in order to obtain a reagent solution.

Advantageously, the solvent comprises, preferably exclusively, water. In particular, the first mixing step is continued until complete dissolution of the silicate compound in the solvent.

According to the invention, the method comprises a second step of mixing the reagent solution with the precursor to obtain a geopolymer binder. In particular, in the second mixing step the precursor and the reagent solution are mixed in a proportion by weight comprised between 55:45 and 80:20, preferably comprised between 65:35 and 75:25.

Advantageously, the second mixing step is continued until complete depolymerization of the precursor in the reagent solution, thanks to the silicate compound.

The method further comprises a third step of mixing the geopolymer binder with the first aggregate to obtain a coating based on geopolymer binder. In particular, the first aggregate is mixed in a quantity greater than or equal to 20% by weight with respect to the coating.

Advantageously, a second aggregate is also mixed in the third mixing step and/or in subsequent mixing steps, for example to obtain the preferred embodiment described above.

Advantageously, the second and the third mixing step are carried out separately.

Thereby, it is advantageously possible to obtain a basic geopolymer binder, which can have a substantially constant and versatile composition even when the uses vary and to which different types and quantities of aggregates can be added. For example, the third mixing step may occur directly before the coating is used to apply it on a surface.

Advantageously, the coating can be applied to the surface to be coated by brush or spray. In particular, in the event of spray application, it is advisable to use aggregates with a finer grain size and a greater quantity of water to make the material more fluid.

Advantageously, the application of the coating can be performed several times, even at intervals of time, so as to form several layers.

Therefore, the invention thus conceived achieves the pre-set objects.

## Claims

1. Coating based on geopolymer binder, **characterized in that** it comprises:
- at least one geopolymer binder containing:
- an amorphous silico-aluminate precursor in a quantity comprised between 55 and 80% by weight with respect to the geopolymer binder;
- a reagent solution in a quantity comprised between 20 and 45% by weight with respect to the geopolymer binder, intended to react with said precursor and comprising a silicate compound selected from among a sodium silicate, a potassium silicate, a lithium silicate and mixtures or compounds thereof;
- at least one first aggregate constituted by graphite, in a quantity comprised between 5 and 20% by weight with respect to the coating.

2. Coating based on geopolymer binder according to claim 1, **characterized in that** said silicate compound is present in a quantity comprised between 35 and 50% by weight with respect to said reagent solution.

3. Coating based on geopolymer binder according to claim 1 or 2, **characterized in that** the graphite contained in said first aggregate is in the form of powder with grain size dimensions smaller than or equal to 250 µm,
wherein powdered graphite is sieved graphite.

4. Coating based on geopolymer binder according to any one of the preceding claims, **characterized in that** said amorphous silico-aluminate precursor comprises metakaolin.

5. Coating based on geopolymer binder according to any one of the preceding claims, **characterized in that** it comprises a second aggregate comprising at least one, and preferably more than one, from among: a spheroid sand, a micronized glass, a mineral filler derived from industrial processing discards, a zeolite.

6. Coating based on geopolymer binder according to claim 5, **characterized in that** said spheroid sand is selected from among: spheroid quartz sand, spheroid feldspar sand and mixtures thereof.

7. Coating based on geopolymer binder according to claim 5 or 6, **characterized in that** said mineral filler derived from industrial processing discards is selected from among: a steelworks discard mineral, granite from industrial waste, quartz from industrial waste and mixtures thereof.

8. Coating based on geopolymer binder according to any one of the preceding claims, **characterized in that** it comprises a mineral oil.

9. Coating based on geopolymer binder base according to any one of the preceding claims, **characterized in that** it comprises at least one aerating additive.

10. Method for attaining a coating based on geopolymer binder, **characterized in that** it comprises:
- a step of arranging:
- an amorphous silico-aluminate precursor;
- a silicate compound selected from among a sodium silicate, a potassium silicate, lithium silicate and mixtures or compounds thereof;
- a solvent;
- at least one first aggregate constituted by graphite;
- a first step of mixing said silicate compound with said solvent in order to obtain a reagent solution;
- a second step of mixing said reagent solution with said precursor in order to obtain a geopolymer binder;
- a third step of mixing said geopolymer binder with said first aggregate in order to obtain a coating based on geopolymer binder;
wherein in said second mixing step said precursor and said reagent solution are mixed in a proportion by weight comprised between 55:45 and 80:20, and
said first aggregate is mixed in a quantity comprised between 5 and 20% by weight with respect to the coating.

## Patentansprüche

1. Beschichtung basierend auf Geopolymer-Bindemittel, **dadurch gekennzeichnet, dass** sie Folgendes umfasst:
- mindestens ein Geopolymer-Bindemittel, das Folgendes enthält:
- eine amorphe Aluminiumsilikat-Vorstufe in einer Menge zwischen 55 und 80 Gew.-% bezogen auf das Geopolymer-Bindemittel,
- eine Reagenzlösung in einer Menge zwischen 20 und 45 Gew.-%, bezogen auf das Geopolymer-Bindemittel, die dazu bestimmt ist, mit der genannten Vorstufe zu reagieren und eine Silikatverbindung enthält, die unter einem Natriumsilikat, einem Kaliumsilikat, einem Lithiumsilikat und Mischungen oder Verbindungen davon gewählt wurde;
- mindestens einen ersten aus Graphit bestehenden Zuschlagstoff in einer Menge zwischen 5 und 20 Gew.-%, bezogen auf die Beschichtung.

2. Beschichtung basierend auf Geopolymer-Bindemittel nach Anspruch 1, **dadurch gekennzeichnet, dass** die genannte Silikatverbindung in einer Menge zwischen 35 und 50 Gew.- %, bezogen auf die genannte Reagenzlösung vorliegt.

3. Beschichtung basierend auf Geopolymer-Bindemittel nach Anspruch 1 oder 2, **dadurch gekennzeichnet, dass** der in dem genannten ersten Zuschlagstoff enthaltene Graphit in Form von Pulver mit einer Korngröße von 250 µm oder weniger vorliegt, wobei der pulverisierte Graphit gesiebter Graphit ist.

4. Beschichtung basierend auf Geopolymer-Bindemittel nach einem beliebigen der vorangegangenen Ansprüche, **dadurch gekennzeichnet, dass** die genannte amorphe Aluminiumsilikat-Vorstufe Metakaolin enthält.

5. Beschichtung basierend auf Geopolymer-Bindemittel nach einem beliebigen der vorangegangenen Ansprüche, **dadurch gekennzeichnet, dass** sie einen zweiten Zuschlagstoff umfasst, der mindestens einen und vorzugsweise mehr als einen unter den folgenden Stoffen umfasst: einen kugelförmigen Sand, ein mikronisiertes Glas, einen aus Abfällen der industriellen Verarbeitung stammenden Füllstoff, einen Zeolith.

6. Beschichtung basierend auf Geopolymer-Bindemittel nach Anspruch 5, **dadurch gekennzeichnet, dass** der genannte kugelförmige Sand unter Folgendem gewählt wird: kugelförmigem Quarzsand, kugelförmigem Feldspatsand und Mischungen davon.

7. Beschichtung basierend auf Geopolymer-Bindemittel nach Anspruch 5 oder 6, **dadurch gekennzeichnet, dass** der genannte aus Abfällen der industriellen Verarbeitung stammende Füllstoff unter Folgendem gewählt wird: einem Stahlwerkabfallmineral, Granit aus Industrieabfällen, Quarz aus Industrieabfällen und Mischungen davon.

8. Beschichtung basierend auf Geopolymer-Bindemittel nach einem beliebigen der vorangegangenen Ansprüche, **dadurch gekennzeichnet, dass** sie ein Mineralöl umfasst.

9. Beschichtung basierend auf Geopolymer-Bindemittel nach einem beliebigen der vorangegangenen Ansprüche, **dadurch gekennzeichnet, dass** sie mindestens einen Belüftungszusatz umfasst.

10. Verfahren zum Bereitstellen einer Beschichtung basierend auf Geopolymer-Bindemittel, **dadurch gekennzeichnet, dass** es Folgendes umfasst:
- ein Schritt des Zusammenstellens:
- einer amorphen Aluminiumsilikat-Vorstufe;
- einer Silikatverbindung, die unter einem Natriumsilikat, einem Kaliumsilikat, einem Lithiumsilikat und Mischungen oder Verbindungen davon gewählt wird;
- eines Lösungsmittels;
- mindestens eines ersten aus Graphit bestehenden Zuschlagstoffs;
- einen ersten Schritt des Mischens der genannten Silikatverbindung mit dem genannten Lösungsmittel, um eine Reagenzlösung zu erhalten;
- einen zweiten Schritt des Mischens der genannten Reagenzlösung mit der genannten Vorstufe, um ein Geopolymer-Bindemittel zu erhalten;
- einen dritten Schritt des Mischens des genannten Geopolymer-Bindemittels mit dem genannten Zuschlagstoff, um eine Beschichtung basierend auf Geopolymer-Bindemittel zu erhalten;
wobei bei dem genannten zweiten Mischschritt die genannte Vorstufe und die genannte Reagenzlösung in einem Gewichtsverhältnis zwischen 55:45 und 80:20 gemischt werden und der genannte erste Zuschlagstoff in einer Menge zwischen 5 und 20 Gew.-%, bezogen auf die Beschichtung, gemischt wird.

## Revendications

1. Revêtement à base de liant géopolymère, **caractérisé en ce qu'**il comprend :
- au moins un liant géopolymère contenant :
- un précurseur amorphe de silico-aluminate en une quantité comprise entre 55 et 80 % en poids par rapport au liant géopolymère ;
- une solution réactive en une quantité comprise entre 20 et 45 % en poids par rapport au liant géopolymère, destinée à réagir avec ledit précurseur et comprenant un composé silicate choisi parmi un silicate de sodium, un silicate de potassium, un silicate de lithium et leurs mélanges ou composés ;
- au moins un premier agrégat constitué de graphite, en une quantité comprise entre 5 et 20 % en poids par rapport au revêtement.

2. Revêtement à base de liant géopolymère selon la revendication 1, **caractérisé en ce que** ledit composé silicate est présent en une quantité comprise entre 35 et 50 % en poids par rapport à ladite solution réactive.

3. Revêtement à base de liant géopolymère selon la revendication 1 ou 2, **caractérisé en ce que** le graphite contenu dans ledit premier agrégat est sous forme de poudre avec des dimensions granulométriques inférieures ou égales à 250 µm, le graphite en poudre étant du graphite tamisé.

4. Revêtement à base de liant géopolymère selon l'une quelconque des revendications précédentes, **caractérisé en ce que** ledit précurseur amorphe de silico-aluminate comprend du métakaolin.

5. Revêtement à base de liant géopolymère selon l'une quelconque des revendications précédentes, **caractérisé en ce qu'**il comprend un second agrégat comprenant au moins un, et de préférence plus d'un, parmi : un sable sphéroïdal, un verre micronisé, une charge minérale issue de rebuts de traitement industriel, une zéolithe.

6. Revêtement à base de liant géopolymère selon la revendication 5, **caractérisé en ce que** ledit sable sphéroïdal est choisi parmi : le sable de quartz sphéroïdal, le sable de feldspath sphéroïdal et leurs mélanges.

7. Revêtement à base de liant géopolymère selon la revendication 5 ou 6, **caractérisé en ce que** ladite charge minérale dérivée de rebuts de traitement industriel est choisie parmi : un minéral de rebuts d'aciérie, du granit provenant de déchets industriels, du quartz provenant de déchets industriels et leurs mélanges.

8. Revêtement à base de liant géopolymère selon l'une quelconque des revendications précédentes, **caractérisé en ce qu'**il comprend une huile minérale.

9. Revêtement à base de liant géopolymère selon l'une quelconque des revendications précédentes, **caractérisé en ce qu'**il comprend au moins un additif d'aération.

10. Procédé pour fournir un revêtement à base de liant géopolymère, **caractérisé en ce qu'**il comprend :
- une étape de préparation :
- d'un précurseur amorphe de silico-aluminate ;
- d'un composé silicate choisi parmi le silicate de sodium, le silicate de potassium, le silicate de lithium et leurs mélanges ou composés ;
- d'un solvant ;
- d'au moins un premier agrégat constitué de graphite ;
- une première étape consistant à mélanger ledit composé silicate avec ledit solvant afin d'obtenir une solution réactive ;
- une deuxième étape consistant à mélanger ladite solution réactive avec ledit précurseur afin d'obtenir un liant géopolymère ;
- une troisième étape consistant à mélanger ledit liant géopolymère avec ledit premier agrégat afin d'obtenir un revêtement à base de liant géopolymère ;
dans lequel, lors de ladite deuxième étape de mélange, ledit précurseur et ladite solution réactive sont mélangés dans une proportion en poids comprise entre 55:45 et 80:20, et ledit premier agrégat est mélangé dans une quantité comprise entre 5 et 20 % en poids par rapport au revêtement.
